# FASCICULE DE BREVET EUROPEEN

(11) **EP 4 347 392 B1**
(45) Date de publication et mention de la délivrance du brevet: **12.02.2025**
(21) Numéro de dépôt: 22730516.6
(22) Date de dépôt: 25.05.2022
(51) Int. Cl.: B64C 25/32, B64C 25/00

(54) **ATTERRISSEUR D'AÉRONEF DOTÉ D'AU MOINS UNE ROUE MOTORISÉE**
FAHRWERK EINES FLUGZEUGS MIT MINDESTENS EINEM ANGETRIEBENEN RAD
AIRCRAFT LANDING GEAR WITH AT LEAST ONE MOTORISED WHEEL

(30) Priorité: 28.05.2021 FR 2105575
(43) Date de publication de la demande: 10.04.2024
(73) Titulaire: Safran Landing Systems, 78140 Vélizy-Villacoublay (FR)
(72) Inventeur: FORTIER, Florent, 77550 MOISSY-CRAMAYEL (FR); DUBOIS, Sébastien, 77550 MOISSY-CRAMAYEL (FR); HENRION, Philippe, 77550 MOISSY-CRAMAYEL (FR)
(74) Mandataire: Cabinet Boettcher
(86) Numéro de dépôt international: PCT/EP2022/064336
(87) Numéro de publication internationale: WO 2022/248627

(56) Documents cités:
- EP-A1- 1 106 501
- EP-A1- 3 002 213
- FR-A1- 3 072 943
- GB-A- 560 316
- US-A- 3 762 670
- US-A1- 2015 136 902

## Description

La présente invention se rapporte au domaine des atterrisseurs d'aéronefs dotés d'au moins une roue motorisée et d'au moins une roue freinée.

### ARRIERE PLAN DE L'INVENTION

Le document EP3002213 décrit un système d'entraînement pour train d'atterrissage d'aéronef pour le taxiing d'un aéronef, comportant une roue d'entraînement montée sur le train d'atterrissage de l'aéronef et pouvant être déployée sélectivement par rapport à celui-ci pour s'engager sur le sol et déplacer l'aéronef sur le sol, le moteur entraînant la roue d'entraînement

Le document brevet FR3072943A1 décrit un atterrisseur doté d'une partie haute destinée à être assemblée avec une structure de l'aéronef et une partie basse équipée d'un bogie formant un balancier et de deux essieux portés aux extrémités de ce bogie.

Cet atterrisseur comporte une jambe reliant la partie haute et la partie basse. Les deux essieux de l'atterrisseur sont perpendiculaires au bogie.

L'essieu avant est équipé d'une pluralité de roues freinées et l'essieu arrière est équipé d'au moins une roue motorisée pour permettre l'évolution de l'aéronef au sol (taxiage ou plus couramment « taxiing »).

Chaque roue motorisée est ainsi agencée pour transmettre au sol des efforts de manoeuvre et chaque roue freinée est agencée pour transmettre au sol des efforts de freinage.

Un amortisseur est relié d'une part au bogie et d'autre part à la jambe pour amortir un mouvement de tangage du bogie vis-à-vis de la jambe, les roues freinées et motorisées étant simultanément déplacées lors du mouvement de tangage du bogie par rapport à la jambe.

La répartition des efforts au sol entre les roues freinées à l'avant et les roues motorisées à l'arrière est difficilement maîtrisable avec ce seul amortisseur couplé au bogie. De ce fait, chaque roue motorisée est susceptible de subir des accélérations / chocs importants pendant les phases de décollage et d'atterrissage ce qui nécessite de prendre des marges importantes sur le dimensionnement des roues motorisées.

Un objet de la présente invention est de proposer un atterrisseur permettant de limiter le risque d'endommagement de roue motorisée au moment des phases de décollage ou d'atterrissage.

### RESUME DE L'INVENTION

A cet effet, l'invention concerne un atterrisseur d'aéronef présentant une partie haute destinée à être assemblée à une structure de l'aéronef et une partie basse munie de premier et deuxième essieux, le premier essieu étant équipé d'au moins une roue freinée et le deuxième essieu étant équipé d'au moins une roue motorisée, l'atterrisseur comprenant une jambe ayant une extrémité haute appartenant à la partie haute de l'atterrisseur et une extrémité basse appartenant à la partie basse de l'atterrisseur.

L'atterrisseur selon l'invention est essentiellement caractérisé en ce qu'il comporte un bras principal monté pivotant vis-à-vis de la jambe via une liaison pivot, ledit premier essieu étant fixé sur ce bras principal à distance de la jambe et le deuxième essieu est fixement relié à la jambe, l'atterrisseur comporte un actionneur principal agencé pour agir sur le bras principal de manière à déplacer le premier essieux entre une position éloignée vis-à-vis de la partie haute et une position rapprochée vis-à-vis de la partie haute, dans la position rapprochée les roues freinée et motorisée sont disposées de manière à pouvoir être simultanément en contact contre un plan de roulement et dans la position éloignée les roues freinée et motorisée sont disposés de manière que chaque roue freinée équipant le premier essieu puisse être en contact contre le plan de roulement alors que chaque roue motorisée équipant le deuxième essieu reste à distance de ce plan de roulement.

Pour la compréhension de l'invention
- une roue freinée est une roue mécaniquement couplée avec un frein pour appliquer un couple s'opposant à la rotation de cette roue freinée par rapport à l'essieu équipé de cette roue freinée (en l'occurrence le premier essieu) ; et
- une roue motorisée est une roue mécaniquement couplée à un moteur destiné à sélectivement appliquer un couple moteur entraînant la rotation de cette roue motorisée par rapport à l'essieu équipé de cette roue motorisée (en l'occurrence le deuxième essieu).

Avec l'atterrisseur selon l'invention, le premier essieu équipé d'une ou plusieurs roues freinées est porté par le bras principal qui pivote vis-à-vis de la jambe d'atterrisseur sous l'effet de l'actionneur principal.

En fonction du déplacement du bras principal par rapport à la jambe, on peut simplement soit mettre en contact les roues freinée et motorisée avec le plan de roulement du sol soit écarter la roue motorisée vis-à-vis de ce plan de roulement pour que seules la ou les roues freinées soient en contact avec le plan de roulement.

Ainsi, les principaux efforts mécaniques transmis, via la jambe, de l'aéronef vers le sol, transitent via les roues seules freinées portées par le premier essieu.

Par ailleurs, tant que la roue motorisée n'est pas mise en contact sur le sol, celle-ci appartient à une partie suspendue de l'atterrisseur qui est supportée via le bras principal.

A l'atterrissage, la roue freinée est en contact avec le sol et la roue motorisée est éloignée du sol, les principaux chocs et efforts transmis via la jambe transitant ainsi via le premier essieu et la ou les roues freinées sans jamais passer par le second essieu et la roue motorisée.

La roue motorisée est ainsi préservée de nombreux risques de défaillance et elle peut être dimensionnée au plus juste pour pouvoir transmettre un couple moteur maximum prédéfini dans une plage de vitesse prédéfinie.

On peut ainsi limiter la masse de la roue motorisée au juste nécessaire.

Par ailleurs, pendant toutes les phases de roulage de l'aéronef, l'aéronef est au moins porté par la / les roues freinées équipant le premier essieu alors que chaque roue motorisée équipant le deuxième essieu peut être sélectivement déplacée vis-à-vis du plan de roulement par déplacement du bras principal sous l'effet de l'actionneur principal.

Tant que les conditions de roulage ne permettent pas une mise en contact de la roue motorisée sur le plan de roulement (par exemple parce que l'aéronef se déplace à une trop grande vitesse), on peut maintenir un écart entre la roue motorisée et le plan de roulement pour que seule une roue freinée reste en contact contre le plan de roulement.

Lorsque les conditions de roulage le permettent, on peut alors décider de commander l'actionneur principal pour mettre simultanément en contact contre le plan de roulement la ou les roues motorisées équipant le deuxième essieu et la ou les roues freinées équipant le premier essieu.

La commande délivrée à l'actionneur principal permet d'ajuster la répartition des efforts appliqués sur le sol via la jambe entre la portion d'efforts transitant via le premier essieu et la ou les roues freinées et la portion d'efforts transitant via le deuxième essieu et la ou les roues motorisées équipant ce deuxième essieu.

Ainsi, grâce à l'invention, les efforts appliqués sur la roue motorisée peuvent être ajustés via une commande délivrée à l'actionneur principal.

Typiquement, pendant les phases d'atterrissage, décollage ou de roulage à grande vitesse, chaque roue motorisée de l'atterrisseur est maintenue à l'écart du plan de roulement pour préserver ces roues motorisées.

Grâce à l'invention, la roue motorisée est alors protégée contre des accélérations ou des chocs de trop grande intensité.

L'invention permet aussi de se dispenser de moyen de débrayage de la roue motorisée vis-à-vis du moteur puisque l'on peut choisir les conditions de vitesse aéronef requises pour mettre en contact la roue motorisée contre le sol.

La taille de la roue motorisée peut être adaptée au seul besoin de manoeuvrer l'aéronef (tracter ou pousser l'aéronef).

L'ensemble roue motorisée / pneu et toute la chaîne cinématique entre cette roue et le moteur est soumis à des vitesses et des efforts beaucoup plus faibles que les roues freinées, ce qui permet de réduire les risques d'endommagement de roue motorisée.

Le fait de pouvoir éloigner la roue motorisée vis-à-vis du plan de roulement pendant des phases de freinage permet de ne pas dégrader la performance de freinage.

Il est également envisageable que le déplacement de chaque au moins une roue motorisée par l'actionneur principal soit synchronisé avec la vitesse de l'aéronef, cette synchronisation pouvant se faire avec une précision relâchée par rapport à la précision de synchronisation normalement requise pour gérer un embrayage de roue motorisée avec son moteur.

L'erreur de synchronisation / de transmission peut être reprise par la flexibilité et le glissement du pneumatique de roue motorisée.

Un autre avantage de l'atterrisseur selon l'invention est qu'il peut être installé en option sur un atterrisseur existant d'aéronef qui comporterait un premier essieu porté par un bras principal pivotant vis-à-vis de la jambe.

Dans ce cas, il suffit de fixer sur une partie basse de la jambe, un second essieu équipé d'une roue motorisée de manière que cette roue motorisée puisse être sélectivement écartée du plan de roulement par variation, sous l'effet de l'actionneur principal, de l'orientation du bras principal vis-à-vis de la jambe.

A cette fin, une interface de fixation du second essieu amovible vis-à-vis de la jambe pourrait être utilisée.

Une interface de fixation pourrait par exemple prendre la forme d'une bride serrant une partie inférieure de la jambe, cette bride pouvant venir en contact et éventuellement se fixer contre un axe de pivot servant de liaison pivot entre le bas principal et la jambe.

Alternativement, la jambe peut comporter une partie forgée dans une pièce structurelle de la jambe pour former une excroissance radiale de la jambe agencée pour y assembler le second essieu.

Préférentiellement, le premier essieu est exclusivement équipé de roue freinée et ne supporte aucune roue motorisée.

Préférentiellement, le deuxième essieu est exclusivement équipé de roue motorisée et ne supporte aucune roue freinée.

Selon un second aspect, l'invention concerne également un aéronef comportant au moins un atterrisseur selon l'un quelconque des modes de réalisation d'atterrisseur selon l'invention.

Cet aéronef est agencé pour sélectivement adopter des première et seconde configurations d'aéronef distinctes l'une de l'autre.

Dans la première configuration d'aéronef ladite au moins une roue freinée équipant le premier essieu et ladite au moins une roue motorisée équipant ledit deuxième essieu sont simultanément en contact contre un plan de roulement pour permettre le roulage de l'aéronef.

Dans la seconde configuration d'aéronef, ladite au moins une roue freinée équipant le premier essieu est en contact contre un plan de roulement alors que ladite au moins une roue motorisée équipant ledit deuxième essieu est écartée de ce plan de roulement, le passage de l'une de ces configurations d'aéronef vers l'autre de ces configurations d'aéronef se fait par actionnement dudit actionneur principal.

L'aéronef selon l'invention bénéficie des avantages associés à l'atterrisseur selon l'invention.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

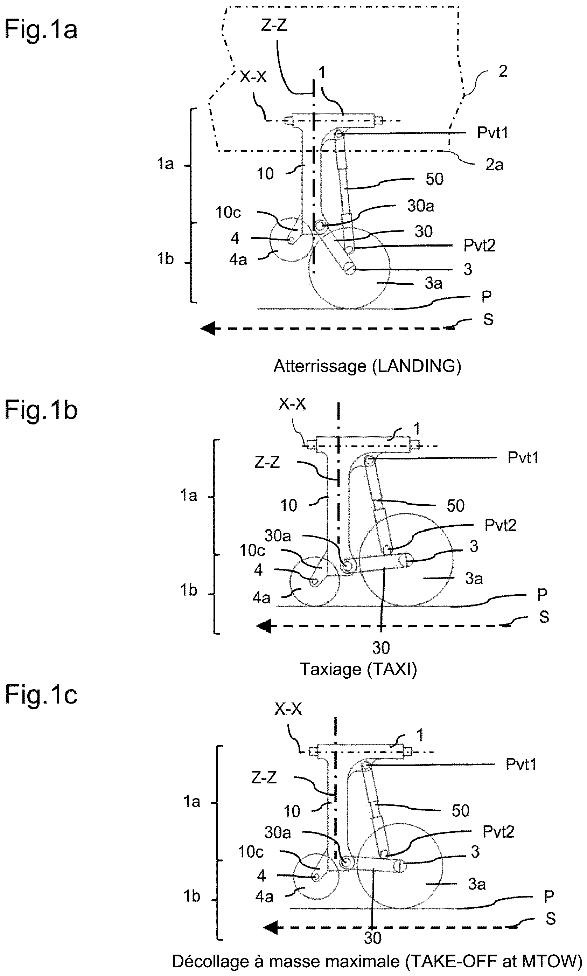

[Fig. 1a] la figure 1a est une vue de côté d'une partie d'aéronef 2 selon l'invention, cet aéronef comprenant une zone de structure d'aéronef 2a (illustrée en pointillés sur cette seule figure 1a) et un atterrisseur 1 selon l'invention dont une partie haute 1a est assemblée de manière mobile sur cette zone de structure 2a, l'atterrisseur 1 est ici dans une configuration d'atterrissage où chaque roue freinée est en contact sur le plan de roulement P du sol et en position éloignée vis-à-vis de la partie haute 1a de l'atterrisseur, chaque roue motorisée 4a étant ainsi écartée du plan de roulement P, l'aéronef est ici en phase d'atterrissage, dite « LANDING » ;
[Fig. 1b] la figure 1b est une vue de côté de l'atterrisseur 1 selon l'invention alors qu'il est dans une configuration de roulage où chacune des roues motorisée(s) 4a et freinée (s) 3a est en contact sur le plan de roulement P, l'aéronef est ici dans ladite première configuration d'aéronef, en phase de taxiage, dite phase « TAXI » ;
[Fig. 1c] la figure le est une vue de côté de l'atterrisseur 1 selon l'invention qui est en configuration de décollage où chaque roue motorisée 4a est éloignée du plan de roulement P alors que chaque roue freinée est en contact contre le plan P pour supporter l'aéronef, l'aéronef est ici dans ladite seconde configuration d'aéronef, en phase de décollage, dite phase « TAKE-OFF » ;

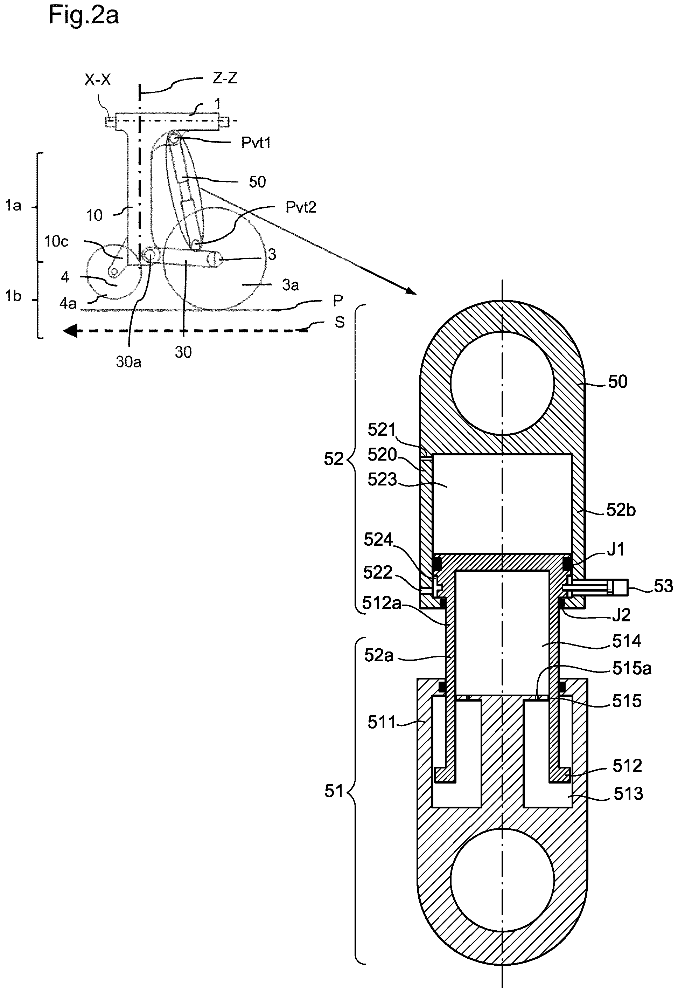

[Fig. 2a] la figure 2a est une vue de côté de l'atterrisseur 1 selon l'invention, associée à une coupe longitudinale de l'actionneur principal 50 alors que l'atterrisseur est en configuration d'atterrissage (dite « LANDING ») où seules les roues freinées 3a sont mises en contact contre le plan de roulement P, chaque roue motorisée 4a étant éloignée de ce plan P ;

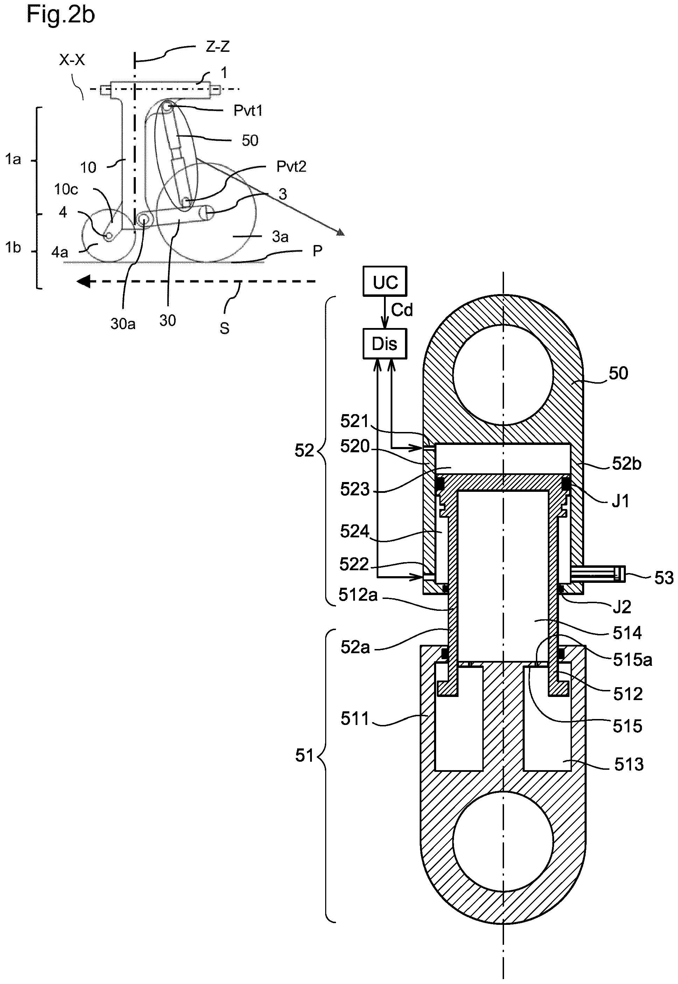

[Fig. 2b] la figure 2b est une vue de côté de l'atterrisseur 1 selon l'invention, associée avec une coupe longitudinale de l'actionneur principal 50 alors que l'atterrisseur 1 est dans une configuration de roulage, plus précisément en phase de taxiage, dite phase « TAXI » (dans une plage de vitesse compatible avec l'utilisation de roue motorisée pour manoeuvrer l'aéronef), dans cette configuration chaque roue motorisée 4a et chaque roue freinée 3a est en contact contre le plan de roulement P et l'amortisseur 51 de l'actionneur principal 50 est faiblement comprimé entre 15 et 40% de sa course maximale d'amortissement, l'atterrisseur étant en charge statique minimale ;

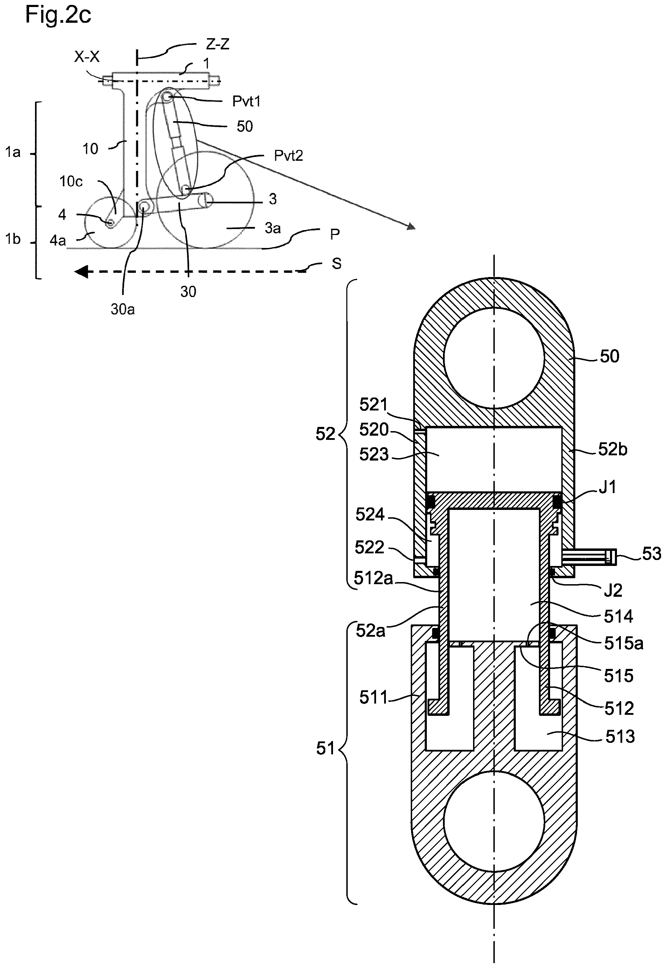

[Fig. 2c] la figure 2c est une vue de côté de l'atterrisseur 1 selon l'invention, associée avec une coupe longitudinale de l'actionneur principal 50 alors que l'atterrisseur 1 est en configuration de roulage (dans une plage de vitesse compatible avec l'utilisation de roue motorisée pour manoeuvrer l'aéronef, c'est-à-dire à basse vitesse), dans cette configuration chaque roue motorisée 4a et chaque roue freinée 3a est en contact contre le plan de roulement P, l'amortisseur 51 de l'actionneur principal 50 est ici plus fortement comprimé que sur la figure 2b car l'atterrisseur est en charge statique maximale, en l'occurrence l'amortisseur 51 est ici comprimé à 85% de sa course maximale d'amortissement de manière à conserver une course supplémentaire d'amortissement de 15% de la course maximale ;

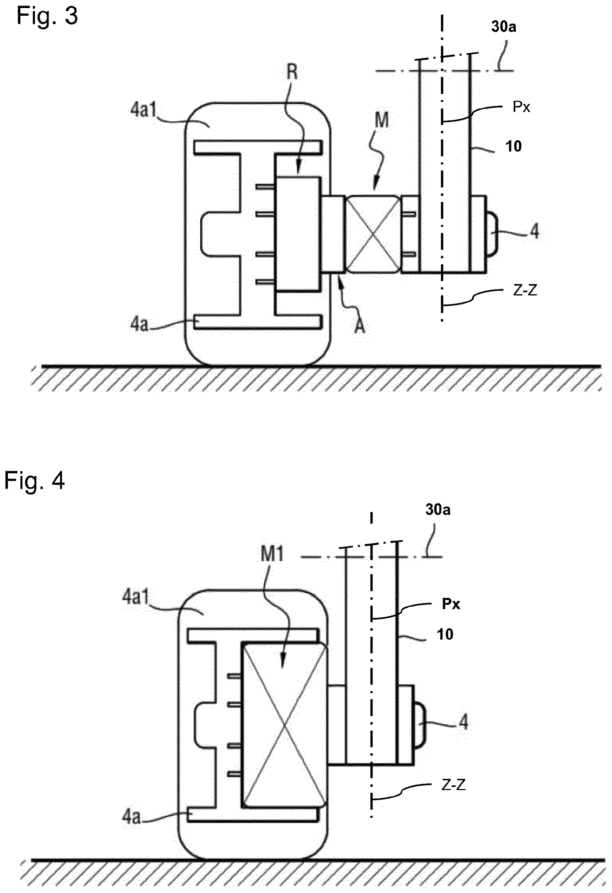

[Fig. 3] la figure 3 est une vue de face d'une portion de l'atterrisseur 1 selon l'invention illustrant un premier mode de liaison entre une roue motorisée 4a et le deuxième essieu 4, dans lequel la roue motorisée 4a est reliée au moteur M qui l'entraîne via un amortisseur A de chocs de transmission (ce type d'amortisseur à ressorts tangentiels permet de filtrer certaines variations du couple de transmission entre le moteur et la roue motorisée 4a) et via un réducteur de vitesse R transmettant le couple du moteur M vers la roue 4a de manière à l'entraîner à rotation avec une vitesse de rotation inférieure à la vitesse du rotation du moteur M ;
[Fig. 4] la figure 4 est une vue de face d'une portion de l'atterrisseur 1 selon l'invention illustrant un deuxième mode de liaison entre une roue motorisée 4a et le deuxième essieu 4, dans lequel la roue motorisée 4a et le moteur sont intégrés pour former un moteur roue, ici le moteur appartenant à un ensemble système propulseur M1 qui est inclus dans la roue 4a.

### DESCRIPTION DETAILLEE DE L'INVENTION

L'atterrisseur selon l'invention est essentiellement illustré par les figures 1a, 1b, 1c, 2a, 2b, 2c qui montrent différentes configurations adoptées par l'atterrisseur 1 au cours de son utilisation.

Cet atterrisseur 1 d'aéronef 2 comporte une partie haute 1a destinée à être assemblée à une structure 2a de l'aéronef 2 et une partie basse 1b de l'atterrisseur 1 qui est munie de premier et deuxième essieux 3, 4.

Comme illustré sur les figures 1a à 2c, l'atterrisseur 1 selon l'invention est préférentiellement un atterrisseur principal de l'aéronef.

Un tel atterrisseur 1 est agencé pour sélectivement adopter une configuration rétractée dans laquelle il est placé dans une zone de la structure 2a de l'aéronef 2 et une configuration déployée dans laquelle il s'étend sous l'aéronef 2 afin de pouvoir le soutenir et permettre son roulage sur le plan de roulement P.

Pour cela, l'atterrisseur peut être relié à la structure 2a de l'aéronef via un axe de pivotement principal X-X de l'atterrisseur sensiblement parallèle au sens de déplacement habituel S de l'aéronef.

Alternativement, l'atterrisseur selon l'invention pourrait être relié à la structure 2a de l'aéronef 2 via tout autre mécanisme de liaison classiquement utilisé.

L'atterrisseur comporte aussi un vérin de manoeuvre de l'atterrisseur (non représenté) pour commander le passage de l'atterrisseur (ici par pivotement de l'atterrisseur autour de l'axe X-X) entre ses configurations rétractée et déployée.

Le premier essieu 3 est ici un essieu arrière et le deuxième essieu 4 est ici un essieu avant par rapport à un sens S de déplacement habituel de l'aéronef 2.

Le premier essieu 3 est équipé de deux roues freinées 3a et le deuxième essieu 4 est équipé d'une roue motorisée 4a.

Chaque roue freinée 3a est adapté à rouler sur le plan de roulement P pour d'une part supporter une partie du poids de l'aéronef 2 lors de l'atterrissage, pendant le roulage de l'aéronef et pendant le décollage et pour d'autre part transmettre un effort de freinage de l'aéronef lorsqu'un frein associé à une roue freinée est actionné.

Chaque roue motorisée 4a est adaptée à transmettre un effort de manoeuvre de l'aéronef (effort provoquant le déplacement de l'aéronef) lorsque la roue motorisée est mise en contact contre le plan P et que le moteur associé à cette roue motorisée 4a est activé.

Ces premier et deuxième essieux 3, 4 sont parallèles entre eux de manière que chaque roue 3a équipant le premier essieu puisse tourner autour d'un axe principal du premier essieu 3 et que chaque roue 4a équipant le deuxième essieu 4 puisse tourner autour d'un axe principal du deuxième essieu, ces axes principaux des premier et second essieux 3, 4 étant parallèles entre eux.

L'atterrisseur 1 comporte une jambe 10 dont une extrémité haute appartient à la partie haute 1a de l'atterrisseur 1 et dont une extrémité basse appartient à la partie basse 1b de l'atterrisseur.

L'atterrisseur 1 comporte aussi un bras principal 30 qui est monté pivotant vis-à-vis de la jambe 10 via un pivot 30a qui est ici situé à proximité de l'extrémité basse de la jambe 10.

Ce bras principal 30 est monté pivotant vis-à-vis de la jambe 10 pour uniquement autoriser un mouvement de tangage de ce bras principal 30.

Il est à noter qu'un mouvement de tangage est un mouvement de rotation autour d'un axe transversal de l'atterrisseur.

Le premier essieu 3 est fixé sur le bras principal 30, à distance de la jambe 10.

L'atterrisseur 2 comporte aussi un actionneur principal 50 agencé pour déplacer le premier essieu 3 entre une position éloignée et une position rapprochée vis-à-vis de ladite partie haute 1a alors que le second essieu 4 reste immobile vis-à-vis de la partie haute de l'atterrisseur.

Dans la position éloignée illustrée à la figure 1a chaque roue 3a équipant le premier essieu 3 est positionnée pour être en contact contre le plan de roulement P alors que chaque roue 4a équipant le deuxième essieu 4 est positionnée pour rester à distance de ce plan P.

Dans la position rapprochée illustrée à la figure 1b, les roues 3a, 4a qui équipent les premier et second essieux 3, 4 sont positionnées pour être simultanément en contact contre le plan de roulement P.

En d'autres termes :
- lorsque le premier essieu est en position éloignée, la distance entre le premier essieu et la partie haute de l'atterrisseur est supérieure à la distance entre le deuxième essieu 4 et la partie haute 1a, a contrario ;
- lorsque le premier essieu est en position rapprochée, la distance entre le premier essieu et la partie haute de l'atterrisseur est inférieure à la distance entre le deuxième essieu 4 et la partie haute 1a.

L'actionneur principal 50 est d'une part relié (via une première liaison pivot Pvt1) à la jambe 10 et d'autre part relié (via une seconde liaison pivot Pvt2) audit bras principal 30 pour d'une part commander l'orientation du bras principal 30 par rapport à la jambe 10 et pour d'autre part amortir le mouvement de pivotement de ce bras principal 30 par rapport à la jambe 10 de manière à également amortir des déplacements du premier essieu 3 vis-à-vis de la jambe 10.

Ainsi, le déplacement du premier essieu 3 par rapport à la jambe 10 est amorti par l'amortisseur 51 de l'actionneur principal 50.

Dès lors, tant que le premier essieu est dans sa position éloignée vis-à-vis de la partie haute de l'atterrisseur 1a, la jambe 10, le second essieu 4 et la roue motorisée 4a équipant ce second essieu 4 appartiennent à une partie suspendue et amortie de l'atterrisseur.

Les équipements qui sont fixés sur la partie suspendue sont ainsi protégés de nombreuses vibrations / chocs occasionnés lors de l'atterrissage.

Le deuxième essieu 4 est rigidement fixé sur la jambe 10 à plus grande proximité de l'extrémité basse de la jambe que de l'extrémité haute de la jambe 10.

Dans le cas présent, l'extrémité basse de la jambe présence une partie 10c radialement déportée vis-à-vis d'un axe longitudinal z-z de la jambe 10.

Cette partie 10c radialement déportée s'étend du côté avant de la jambe dans le sens S de déplacement de l'aéronef et le deuxième essieu 4 est monté fixement sur cette partie radialement déportée de la jambe 10.

De cette manière la roue motorisée 4a est déportée vers l'avant de l'atterrisseur alors que les roues freinées 3a sont déportées vers l'arrière de l'atterrisseur.

La partie 10c de la jambe 10 est préférentiellement une partie forgée de la jambe 10 et le second essieu 4 est rigidement fixé à cette partie 10c de la jambe 10 pour garantir son parallélisme entre les essieux 3 et 4.

Dans le cas présent, les deux roues freinées 3a sont disposées de part et d'autre du bras principal 30.

Pour simplifier les vues de côté de l'atterrisseur selon l'invention illustrées aux figures 1a, 1b, 1c, 2a, 2b, 2c, la roue freinée 3a cachant normalement le bras principal 30 a été omise.

Il est à noter que le nombre de roues freinées 3a et leurs dispositions sur le premier essieu 3 pourraient varier sans sortir du cadre de la présente invention.

Dans le mode de réalisation illustré aux figures 1a à 2c, le deuxième essieu 4 est équipé d'une unique roue motorisée 4a.

Il est toutefois envisageable que ce deuxième essieu 4 soit équipé de plusieurs roues motorisées dont le nombre et la disposition pourraient varier sans sortir du cadre de l'invention.

En particulier, on pourrait avoir deux roues motorisées respectivement placées de part et d'autre de la jambe 10.

La jambe 10, le bras principal 30 et l'actionneur principal 50 peuvent chacun s'étendre selon des axes qui peuvent être longitudinaux et qui leurs sont propres.

Ces axes peuvent être coplanaires entre eux et se trouver dans un plan de symétrie principal Px de l'atterrisseur (ce plan Px est illustré sur les figures 3 et 4). Alternativement, ces axes peuvent être parallèles au plan de symétrie principal Px de l'atterrisseur sans pour autant être coplanaires.

Les liaisons pivot 30a, Pvt1 et Pvt2 forment des pivots simples (non glissants) selon des directions respectives de pivots qui sont parallèles entre elles et perpendiculaires audit plan de symétrie principal Px.

Pour améliorer la stabilité de roulage et éviter le risque d'interaction entre les roues freinées 3a et roues motorisées 4a, la ou les roues motorisées 4a portées par le second essieu 4 sont préférentiellement positionnées entre et à distance de plans, parallèles entre eux, dans lesquels s'étendent les roues freinées 3a.

Dans le mode de réalisation des figures 3 et 4, selon lequel l'atterrisseur comporte une unique roue motorisée 4a, cette dernière est déportée par rapport au plan de symétrie principale Px de l'atterrisseur.

Préférentiellement chaque roue motorisée 4a est du côté extérieur de l'avion par rapport plan de symétrie principal Px de l'atterrisseur 1.

De manière générale chaque roue motorisée 4a est associée à un moteur M qui lui correspond et qui permet son entraînement, mais il est également envisageable qu'une roue motorisée soit entraînée par plusieurs moteurs ou inversement qu'un même moteur entraîne plusieurs roues motorisées.

Préférentiellement le moteur d'entraînement d'une roue motorisée 4a est un moteur électrique M alimenté par une unité d'alimentation électrique appartenant à l'aéronef.

Comme illustré sur la figure 3, un moteur M peut être monté à l'extérieur de la roue motorisée 4a avec une chaîne cinématique entre le moteur M et la roue 4a qui est intégralement supportée par le deuxième essieu 4, le moteur M se trouvant à distance de la roue 4a, entre le bras de manoeuvre 40 et la roue 4a.

Alternativement, comme illustré sur la figure 4, le moteur peut être intégré à la roue. Dans ce mode, le moteur appartient à un ensemble système propulseur M1 essentiellement placé dans la roue 4a, à distance du pneu 4a1.

Comme illustré sur les figures 2a à 2c, l'actionneur principal 50 comporte un premier amortisseur 51 interposé entre le bras principal 30 et la jambe 10 de manière à amortir un mouvement de pivotement du bras principal 30 vis-à-vis de la jambe 10.

Comme on le comprend des figures 2a à 2c, le premier amortisseur 51 est doté de première et seconde pièces 511, 512 montées coulissantes l'une par rapport à l'autre et définissant ensemble des première et seconde chambres d'amortisseur 513, 514 qui sont séparées l'une de l'autre par une paroi mobile 515 du premier amortisseur 51.

Cette paroi mobile 515 est ici définie par une portion de la première pièce coulissante 511 qui forme un piston coulissant à étanchéité dans un cylindre 512a défini dans la seconde pièce 512.

Un joint périphérique de ce piston 515 peut être en contact tout autour de ce piston dans le cylindre 512a défini dans la seconde pièce 512.

Ces première et seconde chambres 513, 514 du premier amortisseur 51 présentent des volumes internes respectifs qui varient en fonction d'une position de coulissement de la paroi mobile 515 de l'amortisseur vis-à-vis de la seconde pièces coulissantes 512 du premier amortisseur 51.

Alternativement, la paroi mobile 515 qui délimite les deux chambres 513, 514 pourrait être définie par une portion de la seconde pièce coulissante 512 qui formerait un piston coulissant à étanchéité dans un cylindre défini dans la première pièce 511.

La paroi mobile 515 est équipée d'au moins un passage ajuté 515a reliant les chambres 513, 514 entre elles pour permettre un passage de fluide d'une de ces chambres vers l'autre de ces chambres afin de d'amortir le déplacement des première et deuxième pièces 511, 512 l'une par rapport à l'autre.

L'actionneur principal 50 comporte aussi un vérin télescopique linéaire 52 de longueur variable pour faire varier l'orientation du bras principal 30 par rapport à la jambe 10 par rotation du bras principal 30 autour de la liaison pivot 30a vis-à-vis de la jambe 10.

Le vérin télescopique 52 de l'actionneur principal 50 est un vérin hydraulique doté d'un premier port 521 de passage de fluide hydraulique.

La longueur de ce vérin 52 est variable en fonction d'un volume de fluide hydraulique admis dans ce vérin 52 via ce premier port 521 de passage de fluide hydraulique.

Le vérin télescopique 52 de l'actionneur principal 50 comporte une première tige de vérin 52a et un premier cylindre 52b.

La première tige de vérin 52a est montée coulissante à étanchéité dans ce premier cylindre 52b de manière à définir une chambre principale 523 dans laquelle débouche ledit premier port de passage 521 de fluide hydraulique.

Cette étanchéité est réalisée à l'aide d'un joint annulaire J1 s'étendant tout autour de la première tige de vérin 52a, dans une gorge de cette première tige pour réaliser une étanchéité glissante contre une surface interne du premier cylindre 52b.

La première tige de vérin 52a et le premier cylindre 52b définissent ensemble une chambre secondaire 524 dans laquelle débouche un deuxième port de passage 522 de fluide hydraulique.

Le vérin comporte un passage formé entre la chambre secondaire 524 et une zone externe au vérin 52 au travers duquel coulisse la première tige 52a.

Un second joint annulaire J2 peut être fixé dans une gorge interne formée dans ce passage pour réaliser une étanchéité contre une surface annulaire de la première tige 52a pour s'opposer au passage de fluide entre la chambre secondaire 524 et la zone externe au vérin via le passage par lequel passe et coulisse la tige 52a.

Ce vérin hydraulique télescopique 52 est un vérin double effet de longueur variable entre une longueur minimale et une longueur maximale.

La longueur maximale du vérin est déterminée de manière que, même si la roue freinée est dégonflée, la roue motorisée reste toujours à l'écart du plan de roulement tant que la longueur courante du vérin est maximale.

Le premier amortisseur 51 est interposé entre la tige du vérin télescopique 52a et ledit bras principal 30 pour amortir le déplacement du bras principal 30 par rapport à la tige 52a du vérin et ainsi amortir le pivotement de ce bras 30 par rapport à la jambe 10 autour du pivot 30a.

A cette fin, la tige 52a et ladite seconde pièce 512 de l'amortisseur peuvent constituer une seule et même pièce ce qui facilite la liaison entre le vérin 52 et l'amortisseur 51.

La longueur minimale du vérin hydraulique télescopique 52 est atteinte lorsque la première tige de vérin 52 est en butée contre une première butée formée à l'intérieur de la chambre principale 523.

La longueur maximale du vérin hydraulique télescopique 52 est atteinte lorsque la première tige de vérin est en butée contre une deuxième butée formée à l'intérieur de la chambre secondaire 524.

L'augmentation de la longueur de ce vérin 52 se fait par admission de fluide vers la chambre principale 523 via le premier port 521 et par refoulement de fluide hors de la chambre secondaire 524 via le deuxième port 522.

La diminution de la longueur de ce vérin 52 se fait par admission de fluide vers la chambre secondaire 524 via le deuxième port 522 et par refoulement de fluide hors de la chambre principale 523 via le premier port 521.

L'aéronef 2 comporte un circuit hydraulique (non représenté) doté d'une conduite d'alimentation en fluide hydraulique sous haute pression reliée à une pompe hydraulique et d'une conduite de retour de fluide à basse pression relativement à ladite haute pression.

L'aéronef 2 comporte aussi un système de distribution hydraulique Dis relié aux premier et second ports du vérin 521, 522 et aux conduites d'alimentation et de retour pour sélectivement adopter :
- au moins une configuration d'extension de longueur du vérin 52 dans laquelle le premier port 521 est mis en relation avec la conduite d'alimentation et le second port 522 est soit préférentiellement mis en relation avec la conduite de retour, soit mis en relation avec le premier port 521 ; et
- au moins une configuration de réduction de longueur du vérin 52 dans laquelle le deuxième port est mis en relation avec la conduite d'alimentation et le premier port est mis en relation avec la conduite de retour.

Selon un mode particulier, on pourrait prévoir que le système de distribution hydraulique Dis puisse adopter une configuration d'immobilisation du vérin dans laquelle la circulation de fluide via les premier et deuxième ports 521, 522 serait interdite de manière à interdire toute variation de longueur du vérin 52.

Lorsque le vérin est piloté pour interdire toute variation de longueur du vérin 52, alors le pivotement du bras principal 30 par rapport à la jambe est autorisé uniquement dans la limite d'une course prédéfinie d'amortissement autorisée par l'amortisseur 51.

Ce vérin 52 pourrait aussi être un vérin monostable qui en cas de défaut d'alimentation hydraulique, par exemple en cas de baisse de pression hydraulique dans l'une au moins de ses chambres en dessous d'une valeur minimale prédéfinie forcerait le passage du premier essieu vers sa position éloignée vis-à-vis de la partie haute 1a de l'atterrisseur. De cette manière, en cas de défaillance hydraulique seule la roue freinée pourrait venir en contact contre le plan de roulement, la roue motorisée étant écartée de ce plan et ainsi préservée.

A cet effet, l'actionneur des figures 2a, 2b, 2c pourrait être équipé d'un moyen de retour élastique (non illustré) exerçant un effort élastique forçant l'allongement du vérin 52.

Ledit moyen de retour élastique pourrait comprendre un ressort disposé dans la chambre secondaire 524 pour y être compressé élastiquement en réponse à une extension du vérin 52.

Le vérin télescopique 52 de l'actionneur principal 50 peut aussi comporter un système de verrouillage 53 schématisé sur les figures 2a à 2c.

Le système de verrouillage 53 pourrait comporter un ou plusieurs segments de verrouillage ou une ou plusieurs griffes de verrouillage.

Ce système de verrouillage 53 est agencé pour sélectivement adopter une configuration verrouillée et une configuration déverrouillée.

Dans sa configuration verrouillée, le vérin télescopique 52 de l'actionneur principal 50 est bloqué pour maintenir le premier essieu 3 dans sa position éloignée vis-à-vis de ladite partie haute 1a de l'atterrisseur.

Dans sa configuration déverrouillée, le vérin télescopique 52 est libéré pour pouvoir déplacer le premier essieu 3 entre sa position éloignée vis-à-vis de la partie haute 1a de l'atterrisseur et sa position rapprochée vis-à-vis de ladite partie haute 1a de l'atterrisseur.

Ce système de verrouillage 53 est agencé pour passer de sa configuration verrouillée vers sa configuration déverrouillée en réponse à une commande de déverrouillage.

Dans le cas présent, la commande de déverrouillage consiste en une augmentation de pression du fluide hydraulique admis via le second port 522 de passage de fluide hydraulique.

Le système de verrouillage 53 est préférentiellement agencé pour que le passage de la configuration déverrouillée vers la configuration verrouillée se fasse automatiquement lors de l'extension du vérin télescopique 52 lorsque le vérin 52 a une longueur courante égale à sa longueur maximale.

L'amortisseur 51 de l'actionneur principal 50 est conformé pour exercer un effort de rappel forçant cet amortisseur 51 à revenir vers une configuration étendue de l'amortisseur 51. Ainsi, dès que la roue freinée entre en contact contre le plan de roulement, l'amortisseur est comprimé sous l'effet du pivotement du bras principal et le mouvement de ce bras est alors amorti.

L'actionneur principal 50 est agencé pour que lorsque la roue motorisée 4a est en contact contre le plan de roulement, l'amortisseur 51 exerce un effort élastique s'opposant à la compression de la roue motorisée 4a contre le plan de roulement.

Ainsi, pour augmenter l'effort de compression de la roue motorisée 4a contre le plan de roulement P et ainsi augmenter l'effort moteur transmissible via la roue motorisée 4a, il suffit de rétracter le vérin 52 pour diminuer l'effort d'amortissement appliqué via l'amortisseur 51 sur le bras principal 30.

A contrario, pour diminuer l'effort de compression de la roue motorisée 4a contre le plan de roulement P et ainsi préserver la roue motorisée 4a contre un risque de surcharge, il suffit d'étendre le vérin 52 pour augmenter l'effort d'amortissement appliqué par l'amortisseur 51 sur le bras principal 30.

La répartition des efforts supportés par la jambe 10 se fait entre la ou les roues freinées équipant le premier essieu 3 et la ou les roues motorisées équipant le second essieu 4 en fonction de l'effort appliqué par l'actionneur principal 50 sur le bras principal 30, cet effort étant lui-même fonction de la pression hydraulique à l'intérieur de la chambre principale 523 du vérin 52.

L'aéronef peut aussi comporter une unité de commande UC de l'atterrisseur qui est reliée audit système de distribution hydraulique Dis pour transmettre une commande Cd de l'actionneur principal 50.

L'actionneur principal 50 est préférentiellement commandé par l'unité de commande UC pour que tant que la vitesse de l'aéronef 2 est supérieure à un seuil de vitesse prédéterminé, l'actionneur principal 50 applique un effort tendant à maintenir le premier essieu 3 dans sa position éloignée vis-à-vis de ladite partie haute 1a de l'atterrisseur 1.

Ainsi, tant que la vitesse de l'aéronef est supérieure au seuil de vitesse prédéterminé, les roues motorisées 4a sont forcément éloignées du plan de roulement P (sol) et seule la ou les roue freinée 3a portée (s) par le premier essieu 3 peuvent venir en contact avec le plan de roulement P.

L'actionneur principal 50 est préférentiellement commandé par l'unité de commande UC pour que lorsque la vitesse de l'aéronef est inférieure au seuil de vitesse prédéterminé, l'actionneur 50 applique alors un effort tendant à maintenir le premier essieu 3 dans une position intermédiaire entre ses positions éloignée et rapprochée vis-à-vis de ladite partie haute 1a de l'atterrisseur 1 de manière que les roues freinées et motorisées puissent être simultanément en contact contre le plan de roulement P pour ainsi répartir des efforts transmis via la jambe en les roues motorisée et freinée.

A cette fin, l'unité de commande UC de l'atterrisseur qui est reliée audit système de distribution hydraulique Dis peut être adaptée pour contrôler l'actionneur principal 50, en l'occurrence pour contrôler ledit vérin 52, de manière à la maintenir dans une position intermédiaire prédéterminée dans laquelle le vérin 52 a une longueur prédéterminée comprise entre lesdites longueur minimale et longueur maximale.

Cette longueur intermédiaire prédéterminée est calculée par un calculateur afin de limiter la charge appliquée via la jambe sur la roue motorisée en dessous d'une valeur de charge maximale prédéterminée.

A cette fin, l'unité de commande UC peut être adaptée pour commander une variation de longueur du vérin télescopique 52 et/ou une variation de coefficient d'amortissement de l'amortisseur 51 en fonction d'une valeur mesurée représentative d'une charge appliquée par l'actionneur principal 50 sur le bras principal 30 et/ou en fonction d'une valeur mesurée représentative d'une longueur courante de l'amortisseur 51 et/ou en fonction d'une valeur mesurée représentative d'une pression courante dans la roue motorisée et/ou en fonction d'une valeur mesurée représentative d'une pression courante dans la roue freinée et/ou en fonction d'une valeur de masse courante de l'aéronef devant être supportée par l'atterrisseur.

Typiquement, la commande de variation de longueur du vérin 52 délivrée par l'unité de commande UC est telle que lorsque les roues freinée(s) et motorisée(s) sont simultanément en contact avec le plan de roulement (lors du taxiage), alors l'effort vertical appliqué sur le plan de roulement via la ou les roues motrices 4a représente environ 20%, à plus ou moins 5% près, de l'effort vertical total appliqué sur le plan de roulement via la ou les roues freinées 3a.

Pour cela, la commande de variation de longueur du vérin 52 peut être calculée en fonction :
- d'une raideur verticale K_{act} de la roue motrice 4a ; et
- d'une raideur verticale globale de suspension du train Kₛᵤₛₚ (incluant les raideurs respectives des pneus des roues freinée 3a, de l'amortisseur 51 et du vérin 52, le tout en série) en prenant en compte la géométrie de l'atterrisseur et une masse courante de l'aéronef.

Grâce à cette commande de l'actionneur principal 50 par l'unité de commande UC :
- lorsque l'aéronef est en charge minimale statique (voir la figure 2b), la longueur intermédiaire prédéterminée du vérin 52 est faible de manière que l'effort appliqué par l'amortisseur 51 sur le bras principal 30 et par conséquent sur la roue freinée soit suffisamment faible pour s'assurer que la roue motorisée reçoive une charge suffisante pour garantir une adhérence minimale au sol ; et
- lorsque l'aéronef est en charge maximale statique (voir la figure 2c), la longueur intermédiaire prédéterminée du vérin 52 est importante de manière que l'effort appliqué par l'amortisseur 51 sur le bras principal 30 et par conséquent sur la roue freinée soit suffisamment fort pour s'assurer que la roue motorisée reçoive une charge suffisante pour garantir une adhérence minimale au sol tout en s'assurant que cette charge reste inférieure à une valeur de charge maximale tolérable par la roue motorisée.

De ce fait, lorsque l'aéronef est en charge statique minimale (OEW pour Operating Empty Weight, c'est-à-dire a masse à vide en ordre d'exploitation), comme c'est le cas sur la figure 2b, le vérin 52 est maintenu à une longueur intermédiaire / course nécessaire pour poser la roue motrice 4a au sol avec une force minimale nécessaire à l'adhérence du pneu.

Pour rentrer le vérin on utilise la pression hydraulique avion. Ce niveau de pression minimum de pression dans le vérin doit être maintenue tout au long du taxiage.

Cette configuration avion correspond pour le vérin à un enfoncement maximum prédéterminé, c'est-à-dire une valeur de longueur intermédiaire prédéterminée minimale.

Lorsque l'aéronef est en charge statique maximale (MTOW pour Maximum Take-Off Weight, c'est-à-dire masse maximale au décollage), comme c'est le cas sur la figure 2c, le vérin est commandé par l'unité de commande UC pour avoir une valeur de longueur intermédiaire prédéterminée maximale de manière que l'amortisseur soit en position comprimée à environ 85% de sa course sous charge maximale.

Dans cette configuration avion, l'effort de taxiage nécessaire est important. Si nécessaire, le vérin 52 est piloté en pression pour se trouver dans une position intermédiaire entre la course maxi (à charge avion minimale) et la position verrouillée par le système de verrouillage 53 (la position verrouillée est utilisée pendant la phase d'atterrissage notamment pour s'assurer que lorsque la roue freinée est en contact sur le sol, la roue motorisée soit alors éloignée du sol).

La longueur courante du vérin est toujours choisie pour s'assurer du maintien d'une adhérence suffisante de la roue motrice 4a au sol tout en évitant une surcharge de cette roue motrice 4a.

Il est à noter que l'actionneur principal 50 pourrait aussi comporter des moyens de réglage commandés pour faire varier des caractéristiques de l'amortisseur 51 comme sa longueur et/ou sa raideur, c'est à dires les caractéristiques de l'amortissement.

Par exemple, la variation de longueur et/ou raideur et/ou d'amortissement de l'amortisseur principal pourrait varier en fonction de la vitesse de l'aéronef.

Ainsi, tant que la vitesse de l'aéronef est supérieure au seuil de vitesse prédéterminé, cet actionneur principal 50 est commandé pour appliquer sur le bras principal 30 un effort tendant à plaquer la roue freinée 3a contre le plan de roulement P et à maintenir la jambe 10 à une distance suffisamment écartée du plan de roulement P pour garantir qu'aucune roue motorisée 4a portée par le deuxième essieu 4 ne soit en contact avec le plan de roulement P.

Par contre, lorsque la vitesse de l'aéronef 2 est inférieure au seuil de vitesse prédéterminé, cet actionneur amortisseur principal 50 est commandés pour plaquer les roues motorisée 4a et freinée 3a sur le plan de roulement P et ainsi réguler la répartition des efforts d'appui de l'aéronef, entre les roues freinée(s) et motorisée(s).

De cette manière on peut garantir qu'à chaque instant lors du roulage des roues motorisée et freinée, chaque roue motorisée peut transmettre des efforts de traction efficaces de l'aéronef et que chaque roue freinée peut soutenir l'aéronef tout étant capable de transmettre en transmettant des efforts de freinage efficaces.

De manière générale, grâce à l'invention, lors du roulage, chaque roue freinée 3 équipant le premier essieu reste en contact contre le plan de roulement alors que ladite au moins une roue motorisée équipant le deuxième essieu est sélectivement mise en contact contre le plan de roulement P ou éloignée de ce plan de roulement P selon que la vitesse courante de roulage est adaptée ou non au fonctionnement de la roue motorisée.

Grâce à l'invention :
- le pneumatique de chaque roue freinée et le diamètre de chaque roue freinée peuvent être adaptés pour répondre aux besoins associés aux phases d'atterrissage, de freinage, et de décollage ; et
- le pneumatique de chaque roue motorisée et le diamètre de chaque roue motorisée peuvent être adaptés pour répondre aux seuls besoins de manoeuvre de l'aéronef, pendant des plages de roulage situées en dehors des phases d'atterrissage, de freinage à forte puissance, et de décollage.

## Revendications

1. Atterrisseur (1) d'aéronef (2) présentant une partie haute (1a) destinée à être assemblée à une structure (2a) de l'aéronef (2) et une partie basse (1b) munie de premier et deuxième essieux (3, 4), le premier essieu (3) étant équipé d'au moins une roue freinée (3a) et le deuxième essieu (4) étant équipé d'au moins une roue motorisée (4a), l'atterrisseur comprenant une jambe (10) ayant une extrémité haute appartenant à la partie haute (1a) de l'atterrisseur (1) et une extrémité basse appartenant à la partie basse (1b) de l'atterrisseur, l'atterrisseur comportant un bras principal (30) monté pivotant vis-à-vis de la jambe (10) via une liaison pivot (30a), **caractérisé en ce que** ledit premier essieu (3) est fixé sur ce bras principal (30) à distance de la jambe (10) et que le deuxième essieu (4) est fixement relié à la jambe (10), l'atterrisseur (1) comportant un actionneur principal (50) agencé pour agir sur le bras principal (30) de manière à déplacer le premier essieux (3) entre une position éloignée vis-à-vis de la partie haute (1a) et une position rapprochée vis-à-vis de la partie haute (1a), dans la position rapprochée les roues freinée et motorisée (3a, 4a) étant disposées de manière à pouvoir être simultanément en contact contre un plan de roulement (P) et dans la position éloignée les roues freinée et motorisée étant disposés de manière que chaque roue freinée (3a) équipant le premier essieu (3) puisse être en contact contre le plan de roulement (P) alors que chaque roue motorisée (4a) équipant le deuxième essieu (4) reste à distance de ce plan de roulement (P).

2. Atterrisseur (1) d'aéronef (2) selon la revendication 1, dans lequel l'actionneur principal (50) est d'une part relié à la jambe (10) via un premier pivot (Pvt1) et d'autre part relié audit bras principal (30) via un second pivot (Pvt2) pour pivoter ce bras principal (30) par rapport à la jambe (10) et ainsi déplacer le premier essieu (3) entre sa position éloignée vis-à-vis de la partie haute (1a) et sa position rapprochée vis-à-vis de la partie haute (1a), l'actionneur principal (50) comportant un vérin télescopique (52) linéaire de longueur variable pour faire varier l'orientation du bras principal (30) par rapport à la jambe (10) et un premier amortisseur (51) interposé entre le bras principal (30) et à la jambe (10) de manière à amortir un mouvement de pivotement du bras principal (30) vis-à-vis de la jambe (10).

3. Atterrisseur d'aéronef selon la revendication 2, dans lequel l'actionneur principal (50) comporte un système de verrouillage (53) adoptant sélectivement une configuration verrouillée et une configuration déverrouillée, dans sa configuration verrouillée, le vérin télescopique (52) de l'actionneur principal (50) est bloqué pour maintenir le premier essieu (3) dans sa position éloignée vis-à-vis de ladite partie haute (1a) et dans sa configuration déverrouillée le vérin télescopique (52) étant libéré pour pouvoir déplacer le premier essieu (3) entre sa position rapprochée et sa position éloignée vis-à-vis de ladite partie haute (1a) de l'atterrisseur.

4. Atterrisseur d'aéronef selon la revendication 3, dans lequel le système de verrouillage (53) est agencé pour passer de sa configuration verrouillée vers sa configuration déverrouillée en réponse à une commande de déverrouillage.

5. Atterrisseur d'aéronef selon l'une quelconque des revendications 2 à 4, dans lequel le vérin télescopique (52) est un vérin hydraulique doté d'un premier port (521) de passage de fluide hydraulique, la longueur de ce vérin (52) étant variable en fonction d'un volume de fluide hydraulique admis dans ce vérin (52) via ce premier port (521) de passage de fluide hydraulique.

6. Atterrisseur d'aéronef selon la revendication 5, dans lequel le vérin télescopique (52) de l'actionneur principal (50) comporte une première tige de vérin (52a) et un premier cylindre (52b), la première tige de vérin (52a) étant montée coulissante à étanchéité dans ce premier cylindre (52b) de manière à définir une chambre principale (523) dans laquelle débouche ledit premier port de passage (521) de fluide hydraulique.

7. Atterrisseur d'aéronef selon la revendication 6, dans lequel la première tige de vérin (52a) et le premier cylindre (52b) définissent ensemble une chambre secondaire (524) dans laquelle débouche un deuxième port de passage (522) de fluide hydraulique, ce vérin hydraulique télescopique (52) de l'actionneur principal (50) étant un vérin double effet de longueur variable entre une longueur minimale et une longueur maximale.

8. Atterrisseur d'aéronef selon l'une au moins des revendications 6 ou 7, dans lequel le premier amortisseur (51) est interposé entre la tige du vérin télescopique (52a) et ledit bras principal (30) pour amortir le déplacement du bras principal (30) par rapport à la tige du vérin.

9. Atterrisseur d'aéronef selon l'une au moins des revendications 2 à 8, comportant une unité de commande (UC) adaptée pour commander une variation de longueur du vérin télescopique (52) en fonction d'une valeur mesurée représentative d'une charge appliquée par l'actionneur principal (50) sur le bras principal (30) et/ou en fonction d'une valeur mesurée représentative d'une longueur courante de l'amortisseur (51) et/ou en fonction d'une valeur mesurée représentative d'une pression courante dans la roue motorisée et/ou en fonction d'une valeur mesurée représentative d'une pression courante dans la roue freinée et/ou en fonction d'une valeur de masse courante de l'aéronef devant être supportée par l'atterrisseur.

10. Aéronef (2) comportant au moins un atterrisseur (1) selon l'une quelconque des revendications 1 à 9, dans lequel l'aéronef (2) est agencé pour sélectivement adopter des première et seconde configurations d'aéronef distinctes l'une de l'autre, dans la première configuration d'aéronef ladite au moins une roue freinée (3a) équipant le premier essieu (3) et ladite au moins une roue motorisée (4a) équipant ledit deuxième essieu (4) sont simultanément en contact contre un plan de roulement (P) pour permettre le roulage de l'aéronef, dans la seconde configuration d'aéronef (2) ladite au moins une roue freinée (3a) équipant le premier essieu (3) est en contact contre un plan de roulement (P) alors que ladite au moins une roue motorisée (4a) équipant ledit deuxième essieu (4) est écartée de ce plan de roulement (P), le passage de l'une de ces configurations d'aéronef vers l'autre de ces configurations d'aéronef se faisant par actionnement dudit actionneur principal (50).

## Patentansprüche

1. Fahrwerk (1) eines Luftfahrzeugs (2), das einen oberen Teil (1a) zur Verbindung an einer Struktur (2a) des Luftfahrzeugs (2) und einen mit einer ersten und einer zweiten Achse (3, 4) versehenen, unteren Teil (1b) aufweist, wobei die erste Achse (3) mit zumindest einem gebremsten Rad (3a) und die zweite Achse (4) mit zumindest einem motorisierten Rad (4a) ausgestattet ist, wobei das Fahrwerk ein Bein (10) mit einem zum oberen Teil (1a) des Fahrwerks (1) gehörenden, oberen Ende und mit einem zum unteren Teil (1b) des Fahrwerks gehörenden, unteren Ende, umfasst, wobei das Fahrwerk einen Hauptarm (30) enthält, der über eine Schwenkverbindung (30a) relativ zum Bein (10) schwenkbar angebracht ist, **dadurch gekennzeichnet, dass** die erste Achse (3) an dem Hauptarm (30) in einem Abstand zu dem Bein (10) befestigt ist und dass die zweite Achse (4) fest mit dem Bein (10) verbunden ist, wobei das Fahrwerk (1) einen Hauptaktuator (50) enthält, der dafür ausgelegt ist, auf den Hauptarm (30) einzuwirken, um die erste Achse (3) zwischen einer vom oberen Teil (1a) entfernten Position und einer an den oberen Teil (1a) angenäherten Position hin und herzubewegen, wobei in der angenäherten Position das gebremste und das motorisierte Rad (3a, 4a) derart angeordnet sind, dass beide gleichzeitig mit einer Rollbahnebene (P) in Kontakt stehen können, und in der entfernten Position das gebremste und das motorisierte Rad derart angeordnet sind, dass jedes gebremste Rad (3a) an der ersten Achse (3) mit der Rollbahnebene (P) in Kontakt stehen kann, wohingegen jedes motorisierte Rad (4a) an der zweiten Achse (4) von besagter Rollbahnebene (P) beabstandet bleibt.

2. Fahrwerk (1) eines Luftfahrzeugs (2) nach Anspruch 1, wobei der Hauptaktuator (50) über einen ersten Drehzapfen (Pvt1) einerseits mit dem Bein (10) und über einen zweiten Drehzapfen (Pvt2) andererseits mit dem Hauptarm (30) verbunden ist, um den Hauptarm (30) relativ zu dem Bein (10) zu verschwenken und somit die erste Achse (3) zwischen ihrer von dem oberen Teil (1a) entfernten Position und ihrer an den oberen Teil (1a) angenäherten Position hin und herzubewegen, wobei der Hauptaktuator (50) einen linearen Teleskopzylinder (52) mit variabler Länge enthält, um die Ausrichtung des Hauptarms (30) in Bezug auf das Bein (10) zu verändern, sowie einen ersten Dämpfer (51) enthält, der zwischen dem Hauptarm (30) und dem Bein (10) angeordnet ist, um eine Schwenkbewegung des Hauptarms (30) in Bezug auf das Bein (10) zu dämpfen.

3. Fahrwerk eines Luftfahrzeugs nach Anspruch 2, wobei der Hauptaktuator (50) ein Verriegelungssystem (53) aufweist, das wahlweise eine verriegelte Konfiguration und eine entriegelte Konfiguration annimmt, wobei in der verriegelten Konfiguration der Teleskopzylinder (52) des Hauptaktuators (50) verriegelt ist, damit die erste Achse (3) in ihrer von dem oberen Teil (1a) entfernten Position gehalten wird, und in der entriegelten Konfiguration der Teleskopzylinder (52) freigegeben wird, damit die erste Achse (3) zwischen ihrer in Bezug auf das obere Teil (1a) des Fahrwerks angenäherten Position und ihrer davon entfernten Position hin und herbewegt werden kann.

4. Fahrwerk eines Luftfahrzeugs nach Anspruch 3, wobei das Verriegelungssystem (53) dafür ausgelegt ist, in Ansprechen auf einen Entriegelungsbefehl aus seiner verriegelten Konfiguration in seine entriegelte Konfiguration zu wechseln.

5. Fahrwerk eines Luftfahrzeugs nach einem der Ansprüche 2 bis 4, wobei es sich bei dem Teleskopzylinder (52) um einen Hydraulikzylinder mit einer ersten Hydraulikflüssigkeits-Durchgangsöffnung (521) handelt, wobei die Länge des Zylinders (52) in Abhängigkeit von einem Hydraulikflüssigkeitsvolumen veränderbar ist, das dem Zylinder (52) über die erste Hydraulikflüssigkeits-Durchgangsöffnung (521) zugeführt wird.

6. Fahrwerk eines Luftfahrzeugs nach Anspruch 5, wobei der Teleskopzylinder (52) des Hauptaktuators (50) eine erste Zylinderstange (52a) und einen ersten Zylinder (52b) enthält, wobei die erste Zylinderstange (52a) in dem ersten Zylinder (52b) abdichtend verschiebbar angebracht ist, sodass eine Hauptkammer (523) definiert wird in welche hinein die erste Hydraulikflüssigkeits-Durchgangsöffnung (521) mündet.

7. Fahrwerk eines Luftfahrzeugs nach Anspruch 6, wobei die erste Zylinderstange (52a) und der erste Zylinder (52b) gemeinsam eine Nebenkammer (524) definieren, in welche eine zweite Hydraulikflüssigkeits-Durchgangsöffnung (522) mündet, wobei der hydraulische Teleskopzylinder (52) des Hauptaktuators (50) ein doppelt wirkender Zylinder mit einer zwischen einer minimalen und einer maximalen Länge variablen Länge ist.

8. Fahrwerk eines Luftfahrzeugs nach zumindest einem der Ansprüche 6 oder 7, wobei der erste Dämpfer (51) zwischen der Teleskopzylinderstange (52a) und dem Hauptarm (30) angeordnet ist, um die Verfahrbewegung des Hauptarms (30) in Bezug auf die Zylinderstange zu dämpfen.

9. Fahrwerk eines Luftfahrzeugs nach zumindest einem der Ansprüche 2 bis 8, enthaltend eine Steuereinheit (UC), die dafür ausgelegt ist, eine Längenänderung des Teleskopzylinders (52) anzusteuern, und zwar in Abhängigkeit von einem Messwert, der eine von dem Hauptaktuator (50) auf den Hauptarm (30) aufgebrachte Kraft darstellt, und/oder in Abhängigkeit von einem Messwert, der eine aktuelle Länge des Dämpfers (51) darstellt, und/oder in Abhängigkeit von einem Messwert, der einen aktuellen Druck in dem motorisierten Rad darstellt, und/oder in Abhängigkeit von einem Messwert, der einen aktuellen Druck in dem gebremsten Rad darstellt, und/oder in Abhängigkeit von einem Wert, der die von dem Fahrwerk zu tragenden aktuellen Masse des Luftfahrzeugs darstellt.

10. Luftfahrzeug (2) enthaltend zumindest ein Fahrwerk (1) nach einem der Ansprüche 1 bis 9, wobei das Luftfahrzeug (2) dafür ausgelegt ist, wahlweise eine erste und eine zweite Luftfahrzeug-Konfiguration anzunehmen, die sich voneinander unterscheiden: in der ersten Konfiguration stehen das zumindest eine gebremste Rad (3a) an der ersten Achse (3) und das zumindest eine motorisierte Rad (4a) an der zweiten Achse (4) gleichzeitig mit einer Rollbahnebene (P) in Kontakt, um das Rollen des Luftfahrzeugs zu ermöglichen; in der zweiten Luftfahrzeug-Konfiguration (2) steht das zumindest eine gebremste Rad (3a) an der ersten Achse (3) mit einer Rollbahnebene (P) in Kontakt, wohingegen das zumindest eine motorisierte Rad (4a) an der zweiten Achse (4) von besagter Rollbahnebene (P) beabstandet ist, wobei die Überführung aus einer dieser Luftfahrzeug-Konfigurationen in die andere der Luftfahrzeug-Konfigurationen jeweils durch Betätigung des Hauptaktuators (50) erfolgt.

## Claims

1. Aircraft (2) landing gear (1) having an upper portion (1a) intended to be assembled to a structure (2a) of the aircraft (2) and a lower portion (1b) provided with first and second axles (3, 4), the first axle (3) being equipped with at least one braked wheel (3a) and the second axle (4) being equipped with at least one motorised wheel (4a), the landing gear comprising a strut (10) having an upper end belonging to the upper portion (1a) of the landing gear (1) and a lower end belonging to the lower portion (1b) of the landing gear, the landing gear including a main arm (30) pivotally mounted relative to the strut (10) via a pivot connection (30a), **characterised in that** said first axle (3) is fixed to this main arm (30) at a distance from the strut (10) and the second axle (4) is fixedly connected to the strut (10), the landing gear (1) including a main actuator (50) arranged to act on the main arm (30) so as to move the first axle (3) between a position remote from the upper portion (1a) and a position close to the upper portion (1a), in the close position the braked and motorised wheels (3a, 4a) being arranged so as to be able to be in contact simultaneously against a running surface (P) and in the remote position, the braked and motorised wheels being arranged so that each braked wheel (3a) equipping the first axle (3) can be in contact against the running surface (P) while each motorised wheel (4a) equipping the second axle (4) stay at a distance from this running surface (P).

2. Aircraft (2) landing gear (1) according to claim 1, wherein the main actuator (50) is on the one hand connected to the strut (10) via a first pivot (Pvt1) and on the other end connected to said main arm (30) via a second pivot (Pvt2) to pivot this main arm (30) relative to the strut (10) and thus move the first axle (3) between its position remote with respect to the upper portion (1a) and its position close with respect to the upper portion (1a), the main actuator (50) comprising a linear telescopic actuator (52) of variable length to vary the orientation of the main arm (30) with respect to the strut (10) and a first damper (51) interposed between the main arm (30) and the strut (10) so as to dampen a pivoting movement of the main arm (30) relative to the strut (10).

3. Aircraft landing gear according to claim 2, wherein the main actuator (50) comprises a locking system (53) selectively adopting a locked configuration and an unlocked configuration, in its locked configuration, the telescopic actuator (52) of the main actuator (50) is blocked to keep the second axle (3) in its remote position with respect to said upper portion (1a) of the landing gear and in its unlocked configuration, the telescopic actuator (52) being released to be able to move the second axle (3) between its close position and its remote position with respect to said upper portion (1a) of the landing gear.

4. Aircraft landing gear according to claim 3, wherein the locking system (53) is arranged to pass from its locked configuration to its unlocked configuration in response to an unlocking control.

5. Aircraft landing gear according to any one of claims 2 to 4, wherein the telescopic actuator (52) is a hydraulic actuator provided with a first port (521) for the passage of hydraulic fluid, the length of this actuator (52) being variable according to a volume of hydraulic fluid taken into this actuator (52) via this first port (521) for the passage of hydraulic fluid.

6. Aircraft landing gear according to claim 5, wherein the telescopic actuator (52) of the main actuator (50) comprises a first actuator rod (52a) and a first cylinder (52b), the main actuator rod (52a) being slidingly mounted in this first cylinder (52b) so as to define a main chamber (523) in which said first port (521) for the passage of hydraulic fluid leads.

7. Aircraft landing gear according to claim 6, wherein the main actuator rod (52a) and the first cylinder (52b) together define a secondary chamber (524) in which a second port (522) for the passage of hydraulic fluid leads, this telescopic hydraulic actuator (52) of the main actuator (50) being a double-acting actuator of variable length between a minimum length and a maximum length.

8. Aircraft landing gear according to at least one of claims 6 or 7, wherein the first damper (51) is interposed between the telescopic actuator rod (52a) and said main arm (30) to damp the movement of the main arm (30) relative to the actuator rod.

9. Aircraft landing gear according to at least one of claims 2 to 8, comprising a control unit (UC) adapted to control a variation in length of the telescopic actuator (52) as a function of a measured value representative of a load applied by the main actuator (50) to the main arm (30) and/or as a function of a measured value representative of a current length of the damper (51) and/or as a function of a measured value representative of a current pressure in the motorised wheel and/or as a function of a measured value representative of a current pressure in the braked wheel and/or as a function of a current mass value of the aircraft to be supported by the landing gear.

10. Aircraft (2) comprising at least one landing gear (1) according to any one of claims 1 to 9, wherein the aircraft (2) is arranged to selectively adopt first and second aircraft configurations, distinct from one another, in the first aircraft configuration, said at least one braked wheel (3a) on the first axle (3) and said at least one motorised wheel (4a) on said second axle (4) being simultaneously in contact with the running surface (P) to enable the taxiing of the aircraft, in the second aircraft configuration (2) said at least one braked wheel (3a) on the first axle (3) is in contact with the running surface (P) while said at least one motorised wheel (4a) on said second axle (4) is distanced from this running surface (P), the passage from one of these aircraft configurations to the other of these aircraft configurations being done by actuation of said main actuator (50) .
